**Europäisches Patentamt**

**European Patent Office**

**Office européen des brevets**

(19)

(11) Veröffentlichungsnummer: **0 046 577**
**B1**

(12) **EUROPÄISCHE PATENTSCHRIFT**

(45) Veröffentlichungstag der Patentschrift:
16.05.84

(51) Int. Cl.³: **H 04 L 5/16, H 04 L 25/04**

(21) Anmeldenummer: **81106492.2**

(22) Anmeldetag: **20.08.81**

(54) **Schaltungsanordnung für Filter bei Halbduplexübertragung.**

(30) Priorität: **22.08.80 DE 3031771**

(43) Veröffentlichungstag der Anmeldung:
**03.03.82 Patentblatt 82/9**

(45) Bekanntmachung des Hinweises auf die Patenterteilung:
**16.05.84 Patentblatt 84/20**

(84) Benannte Vertragsstaaten:
**AT BE CH FR GB IT LI NL SE**

(56) Entgegenhaltungen:
**DE - A - 2 251 608**
**DE - A - 2 922 071**
**DE - B - 2 736 522**
**DE - C - 818 966**

(73) Patentinhaber: **SIEMENS AKTIENGESELLSCHAFT,**
**Berlin und München Wittelsbacherplatz 2,**
**D-8000 München 2 (DE)**

(72) Erfinder: **Metzner, Uwe, Theodolindenstrasse 49,**
**D-8000 München 90 (DE)**
Erfinder: **Thilo, Peer, Dr.-Ing., Buchhierlstrasse 19,**
**D-8000 München 71 (DE)**

## Schaltungsanordnung für Filter bei Halbduplexübertragung

Die Erfindung betrifft eine Schaltungsanordnung für Filter bei Halbduplexübertragung mit den Merkmalen des Oberbegriffs des Patentanspruchs 1.

Übertragungssysteme, die Postleitungen benützen, benötigen in jeder Endstelle je zwei Filter. Ein Filter ist hinter dem Sender angeordnet, um keine Störsignale außerhalb des zugelassenen Frequenzbandes zu erzeugen. Das andere Filter ist vor dem Empfänger angeordnet, um die Störsicherheit zu steigern. Außerdem sind zwischen dem Sender und der Übertragungsleitung bzw. zwischen der Übertragungsleitung und dem Empfänger Mittel vorzusehen, die eine Potentialtrennung ermöglichen. Im allgemeinen verwendet man dazu Trennübertrager. Dabei muß die Filtercharakteristik über alle Sende- plus Empfangsfilter plus Trennübertrager hohen Ansprüchen genügen, um die Verzerrung der Nutzsignale möglichst klein zu halten.

Die moderne integrierte Schaltungstechnik gestattet es, Sender und Empfänger sehr klein und preiswert aufzubauen. Obwohl auch die klassischen Filter und Trennübertrager durch Verbesserung der Bauelemente kleiner und preiswerter werden, scheinen sie im Verhältnis zu den integrierten Schaltungen doch noch immer groß und verhältnismäßig teuer. Zur Schaffung preiswerter Übertragungssysteme müssen daher auch Filter und Potentialtrenneinrichtungen verkleinert und verbilligt werden. Dabei soll kein komplizierter Aufbau oder ein schaltungstechnischer Mehraufwand erfolgen oder durch unterschiedliche Ausführung der Endstellen eine Verkomplizierung auftreten.

Es ist daher schon vorgeschlagen worden, bei Sende-Empfangseinrichtungen, die abwechselnd Senden oder Empfangen, für Senden bzw. Empfangen ein elektronisch umschaltbares gemeinsames Filter vorzusehen. In der DE-OS 2 251 608 ist eine Sende- und Empfangseinrichtung mit einem gemeinsamen Sende-Empfangsfilter beschrieben. Das gemeinsame Empfangsfilter ist von einem Bandpaß und zwei Übertragern gebildet, wobei für Senden bzw. Empfangen noch zwei ansteuerbare Schaltverstärker mit jeweils einem Gabelübertrager für eine Vierdrahtleitung vorgesehen ist. Dort ist auch der Hinweis gegeben, eine derartige Schaltungsanordnung für Zweidrahtübertragungswege durch geeignetes Parallelschalten der Eingänge des Gabelübertragers vorzusehen. Es ist jedoch keine Möglichkeit aufgezeigt, bei Sendebetrieb und bei gleichartig aufgebauter Filteranordnung ein weiteres Filterelement anzuschalten.

Aufgabe der Erfindung ist es, bei einer derartigen Sende-Empfangseinrichtung eine Schaltungsanordnung für Filter dahingehend zu verbessern, daß in jeder Endstelle bei gleichartigem Schaltungsaufbau mit wenig Bauelementen eine Filteranordnung und eine Potentialtrennung möglich ist. Dabei soll mit geringem Schaltungsaufwand eine einfache Filterumschaltung beim Übergang von Sende- auf Empfangsbetrieb ermöglicht werden, so daß pro Endstelle ein Filterkreis gespart werden kann.

Diese Aufgabe wird erfindungsgemäß mit den kennzeichnenden Merkmalen des Anspruches 1 gelöst.

Erfindungsgemäß ist nur eine Filteranordnung in jeder Endstelle vorgesehen, die je nach Betriebsart der Endstelle als Sende- oder Empfangsfilter verwendet wird, wobei mit der Umschaltung von Empfang- auf Sendebetrieb ein weiteres Filterelement anschaltbar ist, so daß trotz gleicher Ausführung der Filteranordnung in beiden Endstellen eine ausgeglichene Filtercharakteristik erzielt wird. Dabei weist die Filteranordnung in einer Endstelle eine Parallelschaltung auf, die von der Induktivität einer Wicklung des Trennübertragers, einem Kondensator, einem Widerstand und einem weiteren Filter gebildet ist.

Das weitere Filterelement kann aus einem über ein Schaltelement parallel dazu anschaltbaren weiteren Kondensator bestehen. Beim Sendebetrieb wird über das Schaltelement der zusätzliche Kondensator angeschaltet und in der Empfangsstelle abgeschaltet, so daß bei gleicher Kreisgüte die Mittenfrequenz der Filteranordnung beim Sendekreis beispielsweise niedriger als beim Empfangskreis sein kann.

In einer weiteren Ausgestaltung der Erfindung kann anstelle des zusätzlichen Kondensators, der über ein Schaltelement anschaltbar ist, eine RC-Kombination vorgesehen sein, die über einen Verstärker ansteuerbar parallel an den Parallelschwingkreis anschaltbar ist. In der sendenden Endstelle wird diese RC-Kombination parallel geschaltet, während sie in der Empfangsstation abgetrennt wird, wodurch die Kreisgüte und die Mittenfrequenz der Filteranordnung beim Sendekreis niedriger als beim Empfangskreis ist. Dabei bildet in vorteilhafter Weise die Filteranordnung der sendenden Endstelle mit der Filteranordnung der empfangenden Endstelle ein zweikreisiges Bandfilter.

Zweckmäßigerweise ist in jeder Endstelle ein zusätzliches Empfangsfilter vorgesehen, das dem ersten Empfangskreis ähnlich ist und an der zweiten Wicklung des Trennübertragers angeschlossen ist und mit dessen Induktivität einen zweiten Empfangskreis bildet. Hierbei ergeben die drei einzelnen Schwingkreise zusammen ein dreikreisiges Bandfilter mit unterschiedlicher Kreisgüte und sich voneinander unterscheidenden Mittenfrequenzen. Das heißt, die Summenfiltercharakteristik entspricht der eines dreikreisigen Bandfilters.

Anhand der Zeichnungen werden zwei Ausführungsbeispiele der Erfindung beschrieben. Es zeigt

Fig. 1 eine Filteranordnung mit einem anschaltbaren zusätzlichen Kondensator,

Fig. 2 eine Filteranordnung mit einer über einen steuerbaren Verstärker anschaltbaren RC-Kombination.

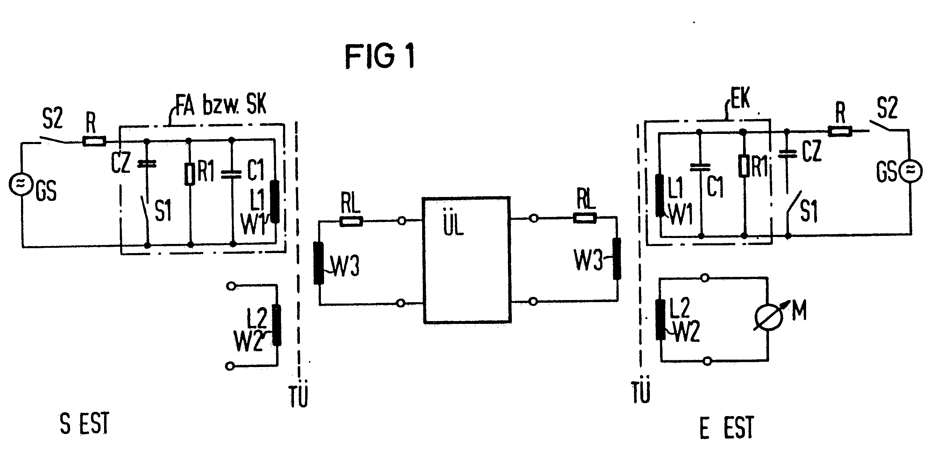

In der Fig. 1 sind zwei gleichartig aufgebaute Endstellen SEST und EEST dargestellt, die jeweils über einen Trennübertrager PT mit einer Übertragungsleitung ÜL miteinander verbunden sind. Die linke Endstelle SEST ist die sendende Station, und die rechte Endstelle EEST ist die empfangende Station. Jeder Trennübertrager TÜ weist drei Wicklungen W1, W2 und W3 auf, davon ist die Wicklung W3 über einen Widerstand RL an der Übertragungsleitung ÜL angeschlossen. Die Wicklung W1 des Trennübertragers TÜ bildet die Induktivität L1 der Filteranordnung FA, die aus der Parallelschaltung dieser Induktivität L1 dem Kondensator C1 und dem Widerstand R1 und mittels dem Schaltelement S1 anschaltbaren Kondensator CZ besteht. Beide Filteranordnungen sind völlig gleich aufgebaut, mit dem Unterschied, daß beim Sendebetrieb S der Schalter S1 geschlossen ist und damit die Parallelkapazität CZ dazugeschaltet ist, während sie im Empfangsbetrieb E durch das geöffnete Schaltelement S1 abgetrennt ist. Der Empfangskreis EK besteht demnach aus der Induktivität L1, dem Kondensator C1 und dem Widerstand R1. Der Sendekreis SK besteht aus der Parallelschaltung der Induktivität L1, dem Kondensator C1, dem Widerstand R1 und dem weiteren Kondensator CZ. Die zu empfangenden Signale werden an der Empfangsstation EEST an der Wicklung W2 des Trennübertragers TÜ abgegriffen und von da aus weiterverarbeitet. Dies ist in der empfangenden Station EEST mit dem Meßinstrument M angedeutet. Die zu sendenden Signale, dargestellt durch den Generator GS, gelangen über den Schalter S2, der im Sendebetrieb S geschlossen ist, über einen Widerstand R und den Sendekreis SK über den Trennübertrager TÜ auf die Übertragungsleitung ÜL.

Da bekanntlich ein zweikreisiges Bandfilter aus zwei einzelnen Schwingkreisen besteht, die gegeneinander entkoppelt sind, und unterschiedliche Mittenfrequenzen F0 bei gleicher Kreisgüte (Q) aufweisen, ist ein solches zweikreisiges Bandfilter durch die Schaltung gemäß Fig. 1 realisiert. Der eine Schwingkreis ist durch die Filteranordnung FA bzw. den Sendekreis SK der sendenden Endstelle SEST, der zweite Schwingkreis durch die Filteranordnung des Empfangskreises EK in der empfangenden Endstelle EEST gegeben. Durch geeignete Dimensionierung der einzelnen Bauelemente L1, C1, R1, CZ erzielt man hierbei die Summenfiltercharakteristik eines zweikreisigen Bandfilters. Durch diese Anordnung läßt sich pro Endstelle jeweils ein Filterkreis sparen.

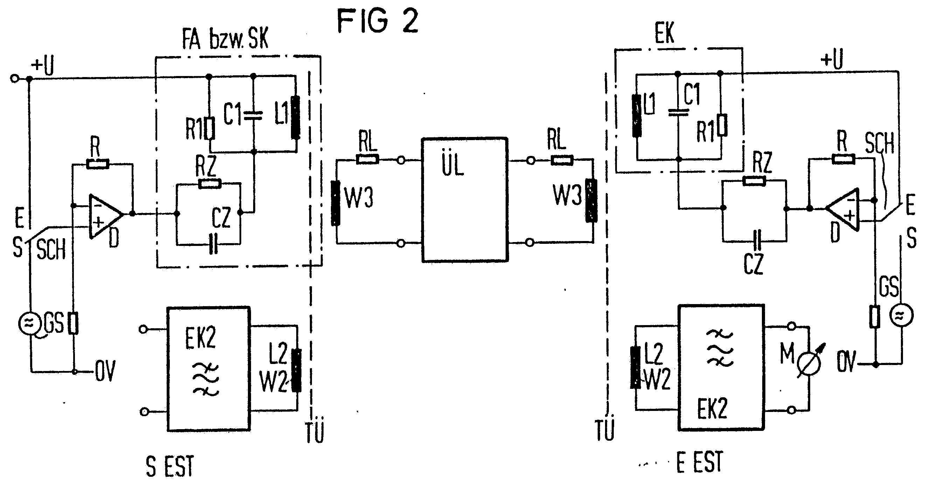

Sieht man in jeder Endstelle einen weiteren Empfangskreis EK2 an der zweiten Wicklung W2 des Trennübertragers TÜ vor, so läßt sich mit diesem dritten Schwingkreis ein dreikreisiges Bandfilter realisieren. Dabei kann der zweite Empfangskreis EK2 ähnlich aufgebaut sein wie der erste Empfangskreis EK. Es kann aber auch ein aktives Filter im zweiten Empfangskreis EK2 vorgesehen sein. In Fig. 2 ist eine Endstelle EST mit einem zweiten Empfangskreis EK2 dargestellt.

Die Schaltungsanordnung in Fig. 2 ist ähnlich der Schaltungsanordnung aus der Fig. 1. Die Filteranordnung FA weist im Gegensatz zu Fig. 1 aber statt des Parallelkondensators CZ eine RC-Kombination auf, die hier aus der Parallelschaltung des Widerstandes RZ und des Kondensators CZ besteht. Im Sendebetrieb S wird diese RC-Kombination nicht über das Schaltelement S1 gemäß Fig. 1, sondern über einen steuerbaren Verstärker D angeschaltet.

Der Verstärker D ist ausgangsseitig mit der RC-Kombination verbunden und eingangsseitig mit einem Umschalter SCH, der auf Senden S oder auf Empfang E schaltbar ist. Bei Sendebetrieb S gelangen die zu sendenden Signale, dargestellt durch den Generator GS, über den Schalter SCH, der auf Senden S geschaltet ist, und dem Verstärker D in die Filteranordnung FA. Von da werden sie über den Trennübertrager TÜ auf die Übertragungsleitung ÜL übertragen und in der Empfangssation EEST über die Wicklung W2 des Trennübertragers TÜ und dem zweiten Empfangskreis EK2 zur weiteren Verarbeitung abgegriffen. Es besteht also hier der Sendekreis SK aus dem Schwingkreis R1, C1 und L1, wobei L1 und C1 die frequenzbestimmenden Glieder sind, und R1 die Kreisgüte Q bestimmt. Die Induktivität L1 ist hierbei wieder die Wicklung W1 des Trennübertragers TÜ.

Bei der Schalterstellung des Schalters SCH auf Senden S liegt wechselspannungsmäßig die RC-Kombination RZ und CZ parallel zum Schwingkreis R1, C1, L1. Hierbei wird die resultierende Kreisgüte Q und Mittenfrequenz F0 durch die RC-Kombination RZ und CZ erniedrigt. Die empfangende Endstelle EEST weist dieselbe Filteranordnung auf, nur ist hier der Schalter SCH in Empfangsstellung E. Damit ist über den Verstärker D die RC-Kombination RZ und CZ abgetrennt, so daß die Mittenfrequenz F0 und die Kreisgüte Q des Eingangskreises EK höher als beim Sendekreis SK sind. Bei der sendenden Station SEST bildet der abgestimmte Übertrager TÜ mit seiner Induktivität L1 den Kondensator C1, R1 und der parallel dazu geschalteten RC-Kombination RZ und CZ einen Schwingkreis SK mit einer Mittenfrequenz von beispielsweise $F01 = 613$ Hz und einer Kreisgüte von $Q1 = 2$. Bei der empfangenden Station EEST bildet der abgestimmte Trennübertrager TÜ mit seiner Induktivität L1 den Kondensator C1 und den Widerstand R1 den Empfangskreis EK und somit einen zweiten Schwingkreis mit einer Mittenfrequenz von beispielsweise $F02 = 743$ Hz und einer Kreisgüte $Q2 \approx 4$. Diese zwei Kreise bilden zusammen mit dem zweiten Empfangskreis EK2, der z. B. eine Kreisgüte von $Q \approx 4$ und eine Mittenfrequenz von $F03 = 483$ Hz besitzt, ein dreikreisiges Bandfilter, das sich bei geeigneter Dimensionierung der einzelnen Bauelemente R1, C1, L1; CZ, RZ und EK2 optimal realisieren läßt.

## Patentansprüche

1. Schaltungsanordnung für Filter bei Halbduplex-Übertragung, mit zur Potentialtrennung zwischen sendenden (S) bzw. empfangenden (E) Endstellen (EST) und einer Übertragungsleitung (ÜL) angeordneten Trennübertragern (TÜ), die in jeder Endstelle (EST) jeweils als Element (L1) einer gleichartigen Filteranordnung (FA) verwendet werden, wobei die Filteranordnung (FA) in Abhängigkeit der Betriebsart (S/E) als Sende- bzw. als Empfangsfilter (SK/EK) schaltbar ist, dadurch gekennzeichnet, daß die Filteranordnung (FA) einer Endstelle (EST) aus der Parallelschaltung der Induktivität (L1) einer ersten Wicklung (W1) des Trennübertragers (TÜ), eines Kondensators (C1), eines Widerstands (R1) und aus einem parallel dazu anschaltbaren weiteren Filterelement (CZ, RZ) besteht, das in Abhängigkeit der Betriebsart (S/E) schaltbar ist.

2. Schaltungsanordnung nach Anspruch 1, dadurch gekennzeichnet, daß das weitere Filterelement von einem weiteren Kondensator (CZ) und einem Schaltelement (S1) gebildet ist.

3. Schaltungsanordnung nach Anspruch 1, dadurch gekennzeichnet, daß das weitere Filterelement von einer über einen Verstärker (D) ansteuerbaren, parallel dazu schaltbaren RC-Kombination (RZ, CZ) gebildet ist.

4. Schaltungsanordnung nach einem der vorhergehenden Ansprüche, dadurch gekennzeichnet, daß die Filteranordnung (FA bzw. SK) der sendenden Endstelle (SEST) mit der Filteranordnung (EK) der empfangenden Endstelle (EEST) ein zweikreisiges Bandfilter bildet, wobei die Kreisgüte (Q) beider Schwingkreise (SK, EK) gleich und die Mittenfrequenz (F0) beim Sendekreis (SK) anders als beim Empfangskreis (EK) ist.

5. Schaltungsanordnung nach einem der vorherigen Ansprüche, dadurch gekennzeichnet, daß in der Endstelle (EST) ein zusätzlicher Empfangskreis (EK2) mit einer dem ersten Empfangskreis (EK) ähnlichen Filteranordnung vorgesehen und an die zweite Wicklung (W2) des Trennübertragers (TÜ) angeschlossen ist und die drei Schwingkreise (SK, EK, EK2) zusammen ein dreikreisiges Bandfilter bilden, wobei die Kreisgüte (Q) und die Mittenfrequenz (F0) jeweils voneinander verschieden sind.

## Claims

1. Circuit arrangement for filters in semiduplex transmission having isolating transformers (TÜ) arranged, for potential isolation, between transmitting (S) or, as the case may be, receiving (E) end stations (EST) and a transmission line (ÜL), which isolating transformers are respectively used as an element (L1) of a similar filter arrangement (FA) in each end station (EST), the filter arrangement (FA) being switchable as a transmitting or as a receiving filter (SK/EK), as the case may be, in dependence upon the mode of operation (S/E), characterized in that the filter arrangement (FA) of an end station (EST) comprises a parallel circuit of the inductance (L1) of a first winding (W1) of the isolating transformer (TÜ), a capacitor (C1), a resistor (R1) and comprises a further filter element (CZ, RZ) switchable parallel thereto and which is switchable in dependence upon the mode of operation (S/E).

2. Circuit arrangement as claimed in claim 1, characterized in that the further filter element is formed from a further capacitor (CZ) and a switching element (S1).

3. Circuit arrangement as claimed in claim 1, characterized in that the further filter element is formed from an RC-combination (RZ, CZ) controllable by means of an amplifier (D) and switchable parallel thereto.

4. Circuit arrangement as claimed in one of the preceding claims, characterized in that the filter arrangement (FA and SK) of the transmitting end station (SEST) together with the filter arrangement (EK) of the receiving end station (EEST) forms a two-circuit band filter, where the circuit quality (Q) of the two oscillating circuits (SK, EK) is identical and the average frequency (F0) in the transmitting circuit (SK) is different to that in the receiving circuit (EK).

5. Circuit arrangement as claimed in one of the preceding claims, characterized in that in the end station (EST), there is arranged an additional receiving circuit (EK2) which has a filter arrangement similar to the first receiving circuit (EK) and which is connected to the second winding (W2) of the isolating transformer (TÜ), and the three oscillating circuits (SK, EK, EK2) together form a three-circuit band filter where the circuit quality (Q) and the average frequency (F0) are respectively different from one another.

## Revendications

1. Montage pour des filtres dans des transmission en semi-duplex, comportant des transformateurs de découplage (TÜ) disposés entre un poste terminal (EST) effectuant l'émission (S) ou la réception (E) et une ligne de transmission (ÜL) et qui sont utilisés dans chaque poste terminal (EST) sous la forme d'un élément (L1) d'un dispositif de filtrage identique (FA), ce dispositif de filtrage (FA) pouvant être branché en fonction du type de fonctionnement (S/E), en tant que filtre d'émission ou filtre de réception (SK/EK), caractérisé par le fait que le dispositif de filtrage (FA) d'un poste terminal (EST) est constitué par le montage en parallèle de l'inductance (L1) d'un premier enroulement (W1) du transformateur de découplage (TÜ), d'un condensateur (C1), d'une résistance (R1) et par un autre élément de filtre (CZ, RZ) pouvant y être branché en parallèle et qui peut être branché en fonction du type de vonctionnement (S/E).

2. Montage suivant la revendication 1, caractérisé par le fait que l'autre élément de filtre est constitué par un autre condensateur (CZ) et par un élément de commutation (S1).

3. Montage suivant la revendication 1, caractérisé par le fait que l'autre élément de filtre est formé par une combinaison RC (RZ, CZ) pouvant être commandée par l'intermédiaire d'un amplificateur (D) et pouvant être branchée en parallèle avec ce dernier.

4. Montage suivant l'une des revendications précédentes, caractérisé par le fait que le dispositif de filtrage (FA ou SK) du poste terminal émetteur (SEST) forme, avec le dispositif de filtrage (EK) du poste terminal récepteur (EEST), un filtre de bande à deux circuits, les facteurs de qualité (Q) des deux circuits oscillants (SK, EK) étant indentiques et la fréquence centrale (F0) dans le circuit d'émission (SK) étant différente de celle du circuit de réception (EK).

5. Montage suivant l'une des revendications précédentes, caractérisé par le fait que dans le poste terminal (EST), un circuit de réception supplémentaire (EK2) est pourvu d'un dispositif de filtrage analogue au premier circuit de réception (EK) et est raccordé au second enroulement (DE) du transformateur de cécouplage (TÜ) et que les trois circuits oscillants (SK, EK, EK2) forment ensemble un filtre de band à trois circuits, les facteurs de qualité (Q) et les fréquences centrales (F0) de ces trois circuits étant respectivement différents les une des autres.

FIG 1

FIG 2